# EUROPEAN PATENT APPLICATION

(11) **EP 3 361 227 A1**
(43) Date of publication of application: **15.08.2018**
(21) Application number: 16855450.9
(22) Date of filing: 13.10.2016
(51) Int. Cl.: G01K 19/00, G01K 17/20, G01D 21/02

(54) **COMPOSITE SENSOR**

(30) Priority: 14.10.2015 JP 2015203211
(71) Applicant: Denso Corporation, Kariya-city Aichi 448-8661 (JP)
(72) Inventor: SAITOU, Keita, Kariya-city Aichi 448-8661 (JP); YAZAKI, Yoshitaro, Kariya-city Aichi 448-8661 (JP); SHIMIZU, Motoki, Kariya-city Aichi 448-8661 (JP); HARADA, Toshikazu, Kariya-city Aichi 448-8661 (JP); SAKAIDA, Atusi, Kariya-city Aichi 448-8661 (JP); TANIGUCHI, Toshihisa, Kariya-city Aichi 448-8661 (JP); GOUKO, Norio, Kariya-city Aichi 448-8661 (JP); MATSUI, Hirohito, Nishio-city Aichi 445-0012 (JP)
(74) Representative: Kuhnen & Wacker Patent- und Rechtsanwaltsbüro PartG mbB
(86) International application number: PCT/JP2016/080316
(87) International publication number: WO 2017/065197

(57) **Abstract**

A composite sensor (1) includes a first sensor (10) configured to detect a first physical quantity; a second sensor (21 to 25) as a sensor of a different type from the first sensor, the second sensor being configured to detect a second physical quantity identical to or correlating with the first physical quantity; and an internal control unit (51) configured to perform failure diagnosis for at least one of the first sensor or the second sensor by comparison between a detection result of the first sensor and a detection result of the second sensor.

## Description

### [Cross-Reference to Related Application]

This application is based on Japanese Patent Application No. 2015-203211 filed October 14, 2015, the description of which is incorporated herein by reference.

### [Technical Field]

The present invention relates to a composite sensor.

### [Background Art]

Typically, various composite sensors including multiple different types of built-in sensors have been proposed. As disclosed in, e.g., Patent Literature 1, the composite sensor of this type has a thermal image sensor and a distance image sensor, and a wiring region of the thermal image sensor and a wiring region of the distance image sensor are arranged to overlap with each other as viewed from a stacking direction.

### [Citation List]

### [Patent Literature]

[PTL 1] JP 2014-32045 A

### [Summary of the Invention]

### [Technical Problem]

The composite sensor described in Patent Literature 1 includes multiple different types of built-in sensors, and for this reason, the frequency of occurrence of faults is high. However, the composite sensor described in Patent Literature 1 does not have a configuration for detecting failure of each sensor, and therefore, there is a problem that sensor failure cannot be recognized even when some of the built-in sensors have failed.

The present invention has been made in view of above, and is intended to provide a technique of allowing detection of senor failure when some of sensors are failed.

### [Solution to Problem]

A composite sensor according to one aspect of the present invention includes a first sensor configured to detect a first physical quantity; a second sensor as a sensor of a different type from the first sensor, the second sensor being configured to detect a second physical quantity identical to or correlating with the first physical quantity; and an control unit configured to perform failure diagnosis for at least one of the first sensor or the second sensor by comparing detection results between the first sensor and the second sensor.

According to such a configuration, the control unit performs failure diagnosis for at least one of the first sensor or the second sensor by the comparison between the detection result of the first sensor and the detection result of the second sensor. With this configuration, sensor failure can be detected when some of the sensors are failed.

### [Brief Description of the Drawings]

Fig. 1 is a view of an overall configuration of a composite sensor of a first embodiment of the present invention.
Fig. 2 is a diagram showing a state where the composite sensor of the first embodiment is fixed to a surface of an engine of a vehicle.
Fig. 3 is a plan view of a heat flux sensor.
Fig. 4 is a sectional view sectioned along a line IV-IV of Fig. 3.
Fig. 5 is a block diagram of the composite sensor of the first embodiment.
Fig. 6 is a flowchart of processing executed by an internal control unit of the composite sensor of the first embodiment.
Fig. 7 is a graph for describing a change in a temperature difference between a first temperature sensor and a second temperature sensor.
Fig. 8 is a graph for describing determination on failure of the heat flux sensor in the composite sensor of the first embodiment.
Fig. 9 is a graph for describing correction of an output value of the heat flux sensor in the composite sensor of the first embodiment.
Fig. 10 is a graph for describing failure prediction based on previous data and the output value of the heat flux sensor in the composite sensor of the first embodiment.
Fig. 11 is a diagram showing a state where a composite sensor of a second embodiment is placed in an air compression mechanism.
Fig. 12 is a diagram showing a state where a heat flux is generated outwardly from a cylinder upon adiabatic compression of air in the cylinder.
Fig. 13 is a flowchart of processing to be executed by an internal control unit of the composite sensor of the second embodiment.
Fig. 14 is a graph for describing failure determination by comparison.
Fig. 15 is a graph for describing failure determination by comparison.
Fig. 16 is a graph for describing failure prediction based on previous data and an output value of a heat flux sensor in the composite sensor of the second embodiment.
Fig. 17 is a graph for describing correction of the output value of the heat flux sensor in the composite sensor of the second embodiment.
Fig. 18 is a view of a state when a composite sensor of a third embodiment is placed at a cutting machine.
Fig. 19 is a flowchart of processing to be executed by an internal control unit of a composite sensor of a third embodiment.
Fig. 20 is a graph for describing failure determination by comparison.
Fig. 21 is a view for describing a variation.

### [Description of Embodiments]

Hereinafter, embodiments of the present invention will be described in more detail with reference to the attached drawings. However, the present invention may be implemented in many different forms, and should not be interpreted as being limited to the embodiments described in the present specification. Rather, these embodiments are provided to make the present disclosure thorough and complete so that the scope of the present invention can be fully transmitted to those skilled in the art. Note that in the embodiments described below, the same reference numerals are used to represent the same or equivalent elements in the figures.

### (First Embodiment)

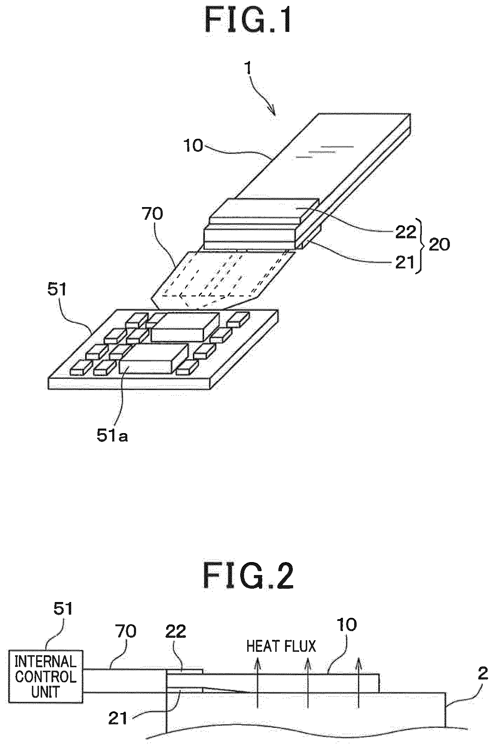

An overall configuration of a composite sensor 1 of a first embodiment of the present invention is illustrated in Fig. 1. As illustrated in Fig. 1, the composite sensor 1 includes a heat flux sensor 10, a first temperature sensor 21, a second temperature sensor 22, an internal control unit 51, and a wiring member 70.

Note that the composite sensor 1 of the present embodiment includes a sensing unit having the heat flux sensor 10, the first temperature sensor 21, and the second temperature sensor 22, and the sensing unit is arranged in contact with a surface of an engine 2 of a vehicle illustrated in Fig. 2.

The heat flux sensor 10 is configured to detect, as a first physical quantity, a heat flux which is one of fluxes. The heat flux is the amount of heat passing through a unit area per unit time, and W/m2 is used as a unit. The heat flux sensor 10 of the present embodiment detects the heat flux generated in the engine 2 of the vehicle and flowing out of the engine 2, thereby outputting, as a detection result, a signal for identifying the heat flux to the internal control unit 51.

The first temperature sensor 21 and the second temperature sensor 22 are sensors different from the heat flux sensor 10, and are each configured to detect, as a second physical quantity, a temperature correlating with the heat flux detected by the heat flux sensor 10, thereby outputting, as a detection result, a signal for identifying the temperature.

The first temperature sensor 21 and the second temperature sensor 22 can be configured by means of thermocouples, thermistors, etc.

The wiring member 70 is formed of an insulating substrate with a conductive pattern. The conductive pattern is formed on the insulating substrate such that the heat flux sensor 10, the first temperature sensor 21, and the second temperature sensor 22 are coupled to the internal control unit 51.

The internal control unit 51 is configured as a computer including a central processing unit (CPU), an input/output interface (I/O), etc. (not shown), and has a memory 51a as a storage medium configured to store various types of data. The CPU of the internal control unit 51 is configured to execute various types of processing according to a program stored in the memory 51a.

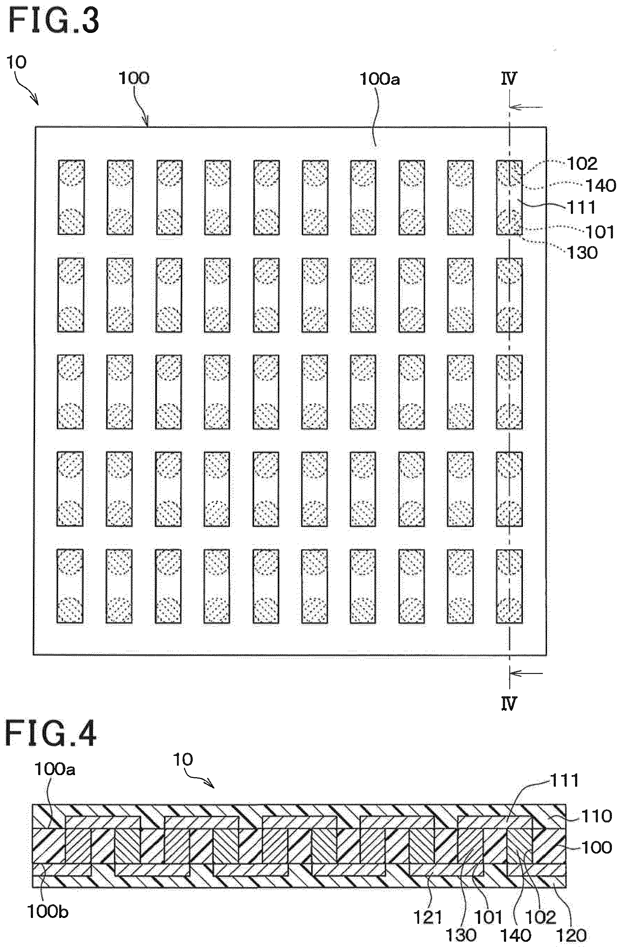

Next, a configuration of the heat flux sensor 10 will be described.
As illustrated in Figs. 3 and 4, the heat flux sensor 10 has such a structure that an insulating substrate 100, a front surface protection member 110, and a back surface protection member 120 are integrated together and that first and second interlayer connection members 130, 140 are alternately connected in series in such an integrated body.

The insulating substrate 100, the front surface protection member 110, and the back surface protection member 120 are in a film shape, and are made of a resin material exhibiting flexibility, such as thermoplastic resin. The insulating substrate 100 is provided with a plurality of first and second via holes 101, 102 penetrating therethrough in the thickness direction.

The first and second interlayer connection members 130, 140 made of different thermoelectric materials such as metal and semiconductor are each embedded in the first and second via holes. Each front surface conductor pattern 111 arranged on a front surface 100a of the insulating substrate 100 forms a one-side connection portion of the first and second interlayer connection members 130, 140. Each back surface conductor pattern 121 arranged on a back surface 100b of the insulating substrate 100 forms the other-side connection portion of the first and second interlayer connection members 130, 140.

When the heat flux has passed through the heat flux sensor 10 in a thickness direction thereof, a temperature difference is generated between the one-side and other-side connection portions of the first and second interlayer connection members 130, 140. Thus, thermoelectric power is generated at the first and second interlayer connection members 130, 140 by the Seebeck effect. The heat flux sensor 10 outputs such thermoelectric power (e.g., voltage) as the sensor signal.

As illustrated in Fig. 2, the first temperature sensor 21 is arranged on a surface on an upstream side of the heat flux passing through the insulating substrate 100 of the heat flux sensor 10 from the engine 2 of the vehicle, and the second temperature sensor 22 is arranged on a surface on a downstream side of the heat flux passing through the insulating substrate 100 of the heat flux sensor 10 from the engine 2 of the vehicle.

That is, thermoelectric power is generated between the first and second interlayer connection members 130, 140 of the heat flux sensor 10 based on a temperature difference ΔT between the temperature detected by the first temperature sensor 21 and the temperature detected by the second temperature sensor 22.

Note that the heat flux DSC detected by the heat flux sensor 10 can be represented by DSC = k × ΔT, where the temperature difference between the temperature detected by the first temperature sensor 21 and the temperature detected by the second temperature sensor 22 is ΔT and a proportionality constant is k.

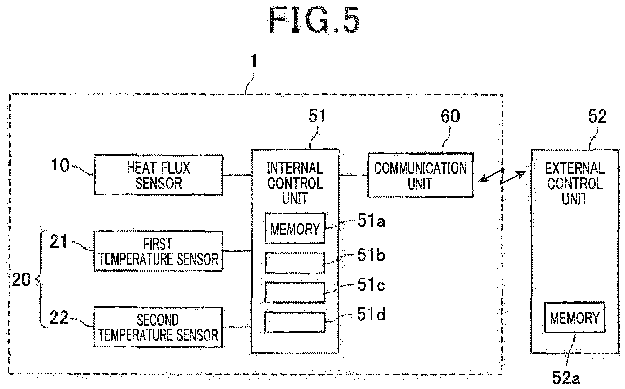

Fig. 5 is a block diagram of the composite sensor 1 of the present embodiment. The composite sensor 1 of the present embodiment includes the heat flux sensor 10, the first temperature sensor 21, the second temperature sensor 22, the internal control unit 51, and a communication unit 60.

The communication unit 60 is configured to perform wireless communication between the internal control unit 51 and an external control unit 52. The communication unit 60 of the present embodiment wirelessly transmits data to the external control unit 52 according to a preset communication format, the data having been input by the internal control unit 51.

The external control unit 52 is configured to execute processing causing a storage medium (illustrated as a memory 52a) to accumulate and store the data received from the internal control unit 51 via the communication unit 60 and causing a display unit (not shown) to display information based on the data accumulated and stored in the storage medium.

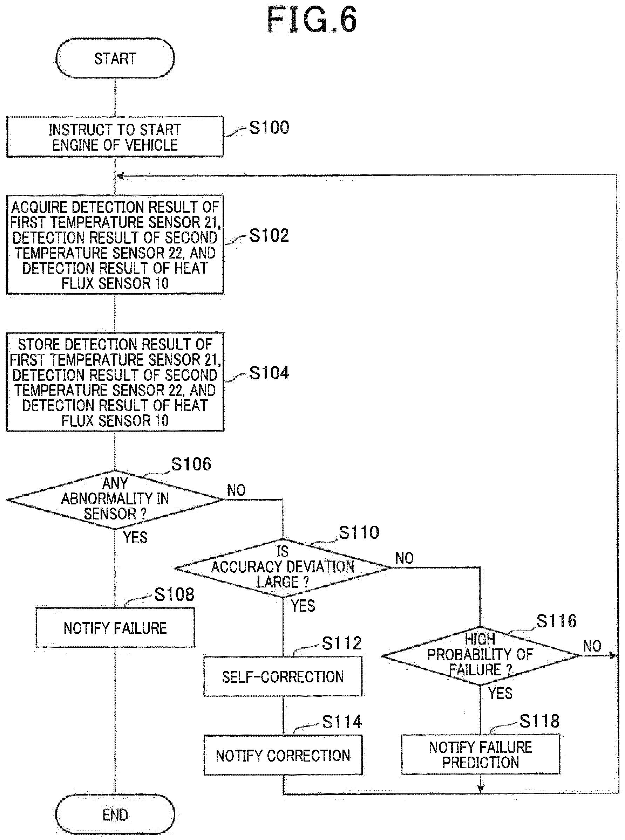

Fig. 6 shows a flowchart of the processing to be executed by the internal control unit 51. The internal control unit 51 executes the processing shown in Fig. 6 at regular intervals. Note that control steps in the flowchart of each drawing form various types of function implementation units of the internal control unit 51.

When a passenger of the vehicle operates an operation unit (not shown), to activate the processing, the internal control unit 51 executes the processing shown in Fig. 6. First, the internal control unit 51 instructs to start the engine of the vehicle at a step S100.

Specifically, the internal control unit 51 controls an ignition switch of the vehicle such that the ignition switch is turned ON.

Next, at a step S102, the internal control unit 51 acquires the detection result of the first temperature sensor 21, the detection result of the second temperature sensor 22, and the detection result of the heat flux sensor 10. Specifically, the temperature is identified based on the signal output by the first temperature sensor 21, and is identified based on the signal output by the second temperature sensor 22. Further, the heat flux is identified based on the signal output produced by the heat flux sensor 10.

Next, at a step S104, the internal control unit 51 causes the memory 51a as the storage medium of the internal control unit 51 to store the detection result of the first temperature sensor 21, the detection result of the second temperature sensor 22, and the detection result of the heat flux sensor 10 acquired at the step S102.

Specifically, the temperature identified based on the signal output by the first temperature sensor 21, the temperature identified based on the signal output by the second temperature sensor 22, and the heat flux output by the heat flux sensor 10 are stored in the memory 51a. Note that not only the latest values but also statistical data for a certain data amount are stored in the memory 51a. The data stored in the memory 51a as described herein is used when a later-described preventive maintenance threshold Mth is set.

Next, at a step S106, the internal control unit 51 determines whether there is an abnormality in the sensor. Specifically, a difference D1 between the temperature detected by the first temperature sensor 21 and the temperature detected by the second temperature sensor 22 is calculated, and based on comparison between the difference D1 and the output value of the heat flux sensor 10, it is determined whether there is the abnormality in the sensor.

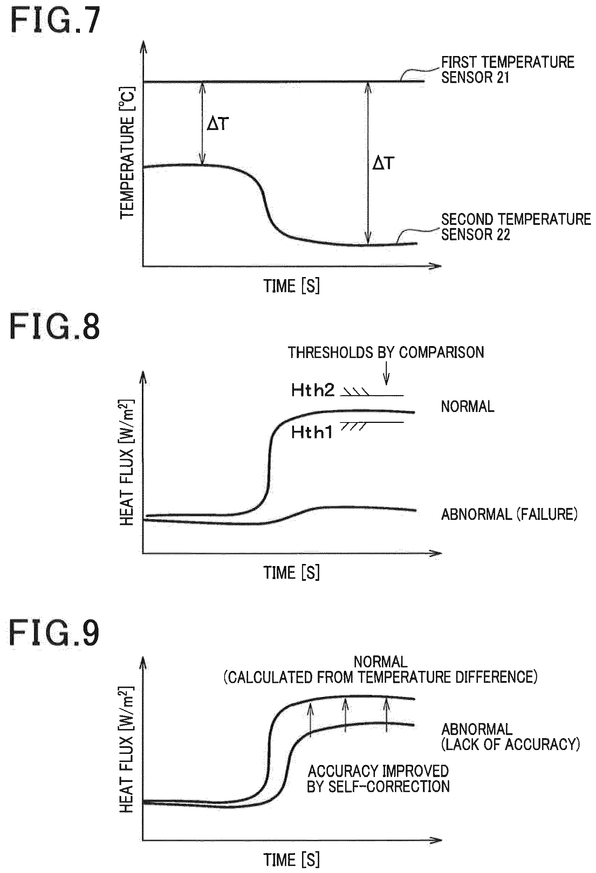

When the ignition switch of the vehicle is turned ON to start the engine 2 of the vehicle, the heat flux is generated outwardly from the engine. At this point, as shown in Fig. 7, the temperature difference ΔT between the first temperature sensor 21 and the second temperature sensor 22 changes over time.

In this state, the heat flux detected by the normal heat flux sensor 10 falls within a standard range with a lower limit threshold Hth1 and an upper limit threshold Hth2 as indicated by "Normal" in Fig. 8. Note that in the present embodiment, a case where the heat flux detected by the normal heat flux sensor 10 is equal to greater than the lower limit threshold Hth1 and equal to or less than the upper limit threshold Hth2 shows the heat flux detected by the heat flux sensor 10 and falling within the standard range.

However, in a case where the heat flux detected by the heat flux sensor 10 falls outside the standard range with the lower limit threshold Hth1 and the upper limit threshold Hth2 as indicated by "Abnormal (Failure)" in Fig. 8, it is determined as failure.

In a case where the output value of the heat flux sensor 10 falls outside the standard range with the lower limit threshold Hth1 and the upper limit threshold Hth2 as described herein, the internal control unit 51 wirelessly transmits, at a step S108, not only each value of the temperature detected by the first temperature sensor 21, the temperature detected by the second temperature sensor 22, and the heat flux detected by the heat flux sensor 10 but also an indication of failure to the external control unit 52. Then, the processing ends.

Note that when receiving the data from the internal control unit 51, the external control unit 52 executes the processing of accumulating and storing the received data in the memory 52a. Further, the external control unit 52 reads the data accumulated and stored in the storage medium from the memory 52a according to the user operation, and displays a graph of the data on the display unit while displaying a message of failure on the display unit.

As shown in Fig. 7, the temperature difference ΔT between the first temperature sensor 21 and the second temperature sensor 22 changes over time. In this state, the heat flux detected by the heat flux sensor 10 falls within the standard range with the lower limit threshold Hth1 and the upper limit threshold Hth2 as indicated by "Normal" in Fig. 8.

In this case, determination at the step S106 is NO, and at a step S110, the internal control unit 51 subsequently determines whether accuracy deviation is great. Specifically, the internal control unit 51 determines whether a difference between the heat flux detected by the heat flux sensor 10 and the lower limit threshold Hthlt is less than a reference value or a difference between the heat flux detected by the heat flux sensor 10 and the upper limit threshold Hth2 is less than a reference value.

In a case where the difference between the heat flux detected by the heat flux sensor 10 and the lower limit threshold Hthlt is less than the reference value or the difference between the heat flux detected by the heat flux sensor 10 and the upper limit threshold Hth2 is less than the reference value, the internal control unit 51 performs self-correction at a step S112.

Fig. 9 shows a state when the difference between the heat flux detected by the heat flux sensor 10 and the lower limit threshold Hthlt is less than the reference value. In such a state, the value of the heat flux detected by the heat flux sensor 10 is multiplied by a predetermined factor, and such a multiplied value is taken as the value of the heat flux detected by the heat flux sensor 10. Self-correction is performed as described above.

Next, at a step S114, the internal control unit 51 wirelessly transmits, together with the temperature detected by the first temperature sensor 21, the temperature detected by the second temperature sensor 22, and the self-corrected value of the heat flux detected by the heat flux sensor 10, an indication of correction of the detection result of the heat flux sensor 10 to the external control unit 52, and the flow of the processing returns to the step S102.

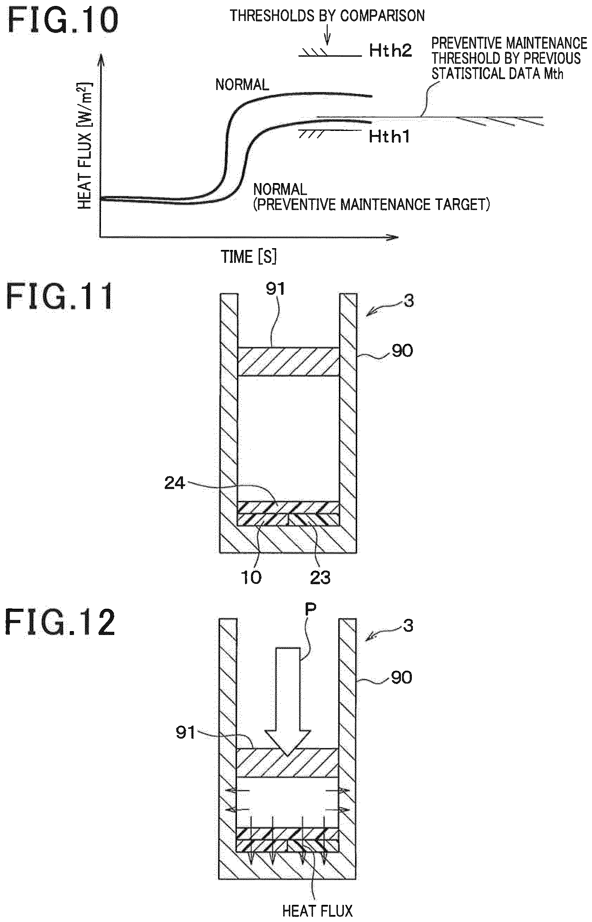

In a case where the accuracy deviation is small and it is determined as NO at the step S110, the internal control unit 51 determines, at a step S116, whether the probability of failure of the heat flux sensor 10 is high. Specifically, as shown in Fig. 10, the internal control unit 51 sets the preventive maintenance threshold Mth based on the statistical data previously stored in the memory 51a at the step S104, and determines whether the value of the heat flux currently detected by the heat flux sensor 10 is equal to or greater than the preventive maintenance threshold Mth.

Note that the preventive maintenance threshold Mth can be, for example, set to a value obtained in such a manner that the average of previous heat fluxes stored in the memory 51a is multiplied by a certain constant (e.g., 10%). The internal control unit 51 includes, as a functional block for executing the step S116, a failure prediction unit 51d configured to predict failure of the heat flux sensor 10 and the first and second temperature sensors 21, 22 by comparison of the detection result of the heat flux sensor 10 and the detection results of the first and second temperature sensors 21, 22 with the detection results of the heat flux sensor 10 and the detection results of the first and second temperature sensors 21, 22 previously stored in the memory 51a.

In a case where it is, at step S116, determined that the probability of failure of the heat flux sensor 10 is high, the internal control unit 51 wirelessly transmits, at step S118, not only each value of the temperature detected by the first temperature sensor 21, the temperature detected by the second temperature sensor 22, and the heat flux detected by the heat flux sensor 10 but also an indication of a high probability of failure of the heat flux sensor 10 to the external control unit 52, and the flow of the processing returns to step S102.

According to the above-described configuration, the internal control unit 51 performs failure diagnosis for at least one of a first sensor or a second sensor by comparing detection results between the first sensor and the second sensor. Thus, when some sensors are failed, such sensor failure can be detected.

The first sensor can be the heat flux sensor 10 configured to detect the heat flux as the first physical quantity.

In the heat flux sensor 10, the insulating substrate 100 made of the thermoplastic resin includes the multiple first and second via holes 101, 102 penetrating the insulating substrate 100 in the thickness direction thereof, and the first and second interlayer connection members 130, 140 made of different types of metals are each embedded in the first and second via holes. Moreover, the first and second interlayer connection members 130, 140 are alternately connected in series.

Further, the following configuration can be made: when the heat flux passes through the insulating substrate 100 in the thickness direction, the temperature difference between the one-side and other-side connection portions of the first and second interlayer connection members 130, 140 is generated, and the thermoelectric power is generated at the one-side and other-side connection portions of the first and second interlayer connection members 130, 140.

In addition, the composite sensor 1 has, as the second sensor configured to detect the second physical quantity identical to or correlating with the first physical quantity, the first and second temperature sensors 21, 22 configured to detect the temperatures.

Thus, the internal control unit 51 can perform failure diagnosis for at least one of the heat flux sensor 10 or the first and second temperature sensors 21, 22 by comparison between a change in the heat flux detected by the heat flux sensor 10 and a change in the temperatures detected by the first and second temperature sensors 21, 22.

Moreover, the composite sensor 1 includes, as the second sensor, the first temperature sensor 21 arranged on the surface on the upstream side of the heat flux passing through the insulating substrate 100 of the heat flux sensor 10, and the second temperature sensor 22 arranged on the surface on the downstream side of the heat flux passing through the insulating substrate 100 of the heat flux sensor 10. Thus, the internal control unit 51 can perform failure diagnosis for at least one of the heat flux sensor 10 or the first and second temperature sensors 21, 22 by comparison between a change in the heat flux detected by the heat flux sensor 10 and the temperature difference between the temperature detected by the first temperature sensor 21 and the temperature detected by the second temperature sensor 22.

Further, the internal control unit 51 includes a correction unit 51b (the step S112) configured to correct, in a case where the internal control unit 51 has determined that a diagnosis result of the failure diagnosis for at least one of the heat flux sensor 10 or the first and second temperature sensors 21, 22 does not show failure, at least one of the detection result of the heat flux sensor 10 or the detection results of the first and second temperature sensors 21, 22 by comparison among the detection result of the heat flux sensor 10 and the detection results of the first and second temperature sensors 21, 22.

With this configuration, the detection result of the heat flux sensor 10 is self-corrected in advance before the heat flux sensor 10 and the first and second temperature sensors 21, 22 are determined as failed, and therefore, preventive maintenance of the composite sensor 1 can be performed.

In addition, the internal control unit 51 includes a storage control unit 51c configured to cause the memory 51a to store the detection result of the heat flux sensor 10 and the detection results of the first and second temperature sensors 21, 22. Moreover, the internal control unit 51 includes the failure prediction unit 51d (the step S116) configured to predict failure of the heat flux sensor 10 and the first and second temperature sensors 21, 22 by comparison of the detection result of the heat flux sensor 10 and the detection results of the first and second temperature sensors 21, 22 with the detection results of the heat flux sensor 10 and the detection results of the first and second temperature sensors 21, 22 previously stored in the memory 51a.

With this configuration, preventive maintenance such as replacement of the composite sensor can be performed in advance before failure of the composite sensor 1.

The CPU of the internal control unit 51 executes various programs stored in the memory 51a, thereby executing various functions of the correction unit 51b, the storage control unit 51c, and the failure prediction unit 51d.

### (Second Embodiment)

Fig.11 illustrates a state where a composite sensor of a second embodiment of the present invention is provided in an air compression mechanism 3. The air compression mechanism 3 has a cylindrical cylinder 90 with a bottom, and a piston 91.

The piston 91 is reciprocable in the cylinder 90 in association with rotation of an electric motor. It is configured such that the inner air pressure of the cylinder 90 changes by such reciprocation of the piston 91.

The composite sensor of the present embodiment includes a sensing unit having a pressure sensor 24, a heat flux sensor 10, and a temperature sensor 23, and the sensing unit is arranged in contact with a bottom surface of the cylinder 90 illustrated in Fig. 11.

Specifically, the heat flux sensor 10 and the temperature sensor 23 are arranged in contact with the bottom surface of the cylinder 90, and the pressure sensor 24 is arranged to sandwich the heat flux sensor 10 and the temperature sensor 23. Thus, the pressure sensor 24 is arranged in contact with air in the cylinder 90.

As illustrated in Fig. 12, the piston 91 reciprocates in the cylinder 90, thereby increasing the inner air temperature of the cylinder 90. Then, due to an increase in the inner air temperature of the cylinder 90, a heat flux flowing from the inside of the cylinder 90 to a surface of the cylinder 90 is generated.

In the present embodiment, the heat flux sensor 10 is configured to detect, as a first physical quantity, the heat flux which is one of fluxes. Moreover, the pressure sensor 24 is configured to detect, as a second physical quantity, the inner air pressure of the cylinder 90 correlating with the heat flux detected by the heat flux sensor 10, thereby outputting, as a detection result, a signal for identifying the pressure. Further, the temperature sensor 23 is configured to detect, as the second physical quantity, the inner air temperature of the cylinder 90 correlating with the heat flux detected by the heat flux sensor 10, thereby outputting, as a detection result, a signal for identifying the inner air temperature of the cylinder 90.

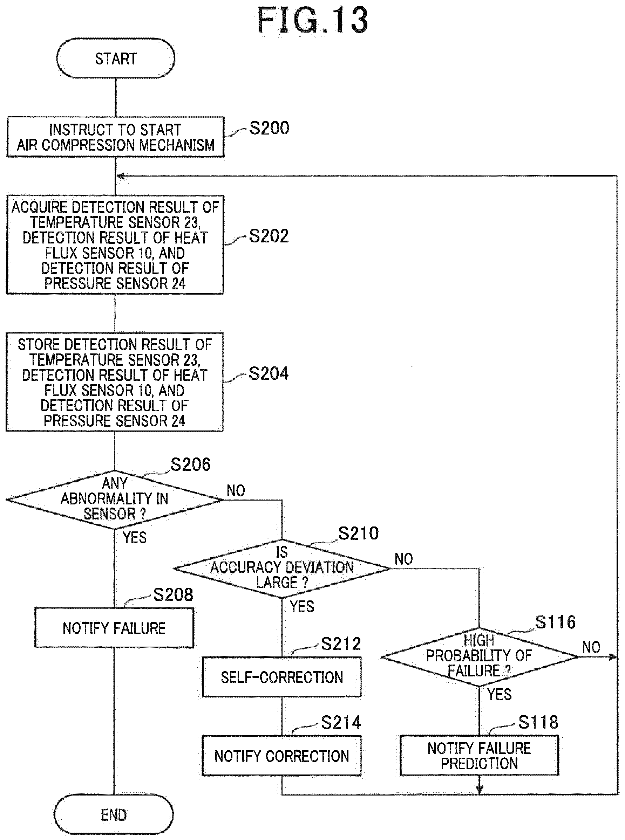

Fig. 13 shows a flowchart of processing to be executed by an internal control unit 51. The internal control unit 51 executes the processing shown in Fig. 13 at regular intervals. Note that control steps in the flowchart of each drawing form various types of function implementation units of the internal control unit 51.

When an operator operates an operation unit (not shown), to activate the processing, the internal control unit 51 executes the processing shown in Fig. 13. First, the internal control unit 51 instructs to start the air compression mechanism 3 at a step S200. Specifically, the internal control unit 51 starts power supply to an electric motor (not shown) of the air compression mechanism 3 such that the electric motor is actuated.

Next, at a step S202, the internal control unit 51 acquires the detection results of the temperature sensor 23, the heat flux sensor 10, and the pressure sensor 24. Specifically, the internal control unit 51 identifies the inner air temperature of the cylinder 90 based on the signal output by the temperature sensor 23, identifies the heat flux passing from the inside of the cylinder 90 to the surface of the cylinder 90 based on a signal output by the heat flux sensor 10, and identifies the inner air pressure of the cylinder 90 based on the signal output by the pressure sensor 24.

Next, at a step S204, the internal control unit 51 causes a memory 51a to store the detection result of the temperature sensor 23, the detection result of the heat flux sensor 10, and the detection result of the pressure sensor 24 acquired at the step S202. Specifically, the internal control unit 51 causes the memory 51a to store the inner air temperature of the cylinder 90 identified based on the signal output by the temperature sensor 23, the heat flux passing from the inside of the cylinder 90 to the surface of the cylinder 90 and identified based on the signal output by the heat flux sensor 10, and the inner air pressure of the cylinder 90 identified based on the signal output by the pressure sensor 24.

Note that not only the latest values but also statistical data for a certain data amount are stored in the memory 51a. The data stored in the memory 51a as described herein is used when a later-described preventive maintenance threshold Mth is set.

Next, at a step S206, the internal control unit 51 determines whether there is an abnormality in the sensor. Suppose that the temperature sensor 23 and the pressure sensor 24 of the temperature sensor 23, the heat flux sensor 10, and the pressure sensor 24 are normal.

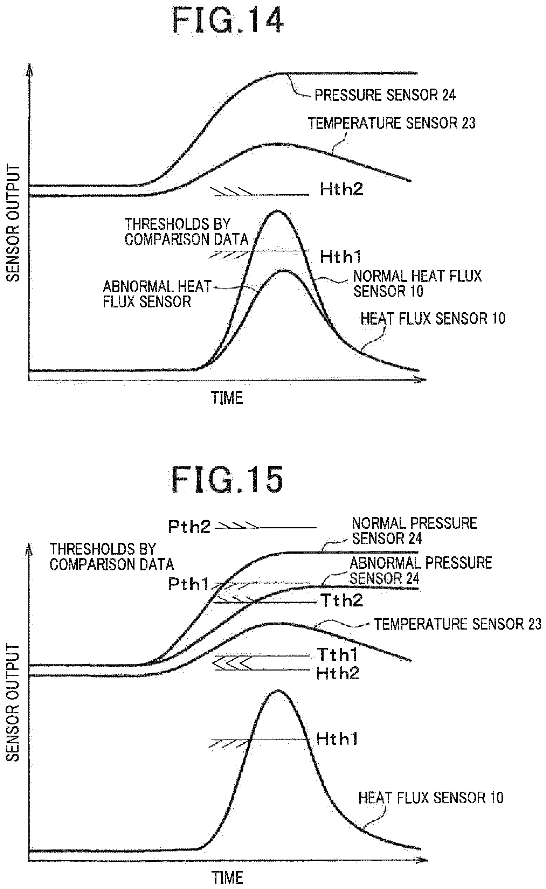

In this case, as shown in Fig. 14, a standard range with a lower limit threshold Hth1 and an upper limit threshold Hth2 of the heat flux sensor 10 is determined based on the detection result of the temperature sensor 23 and the detection result of the pressure sensor 24. Then, based on whether the value of the heat flux detected by the heat flux sensor 10 falls within the standard range with the lower limit threshold Hth1 and the upper limit threshold Hth2, it is determined whether the heat flux sensor 10 has failed.

As shown in Fig. 14, in the case of the normal heat flux sensor 10, the output value of the heat flux sensor 10 falls within the standard range with the lower limit threshold Hth1 and the upper limit threshold Hth2. In the case of the abnormal heat flux sensor 10, the output value of the heat flux sensor 10 falls outside the standard range with the lower limit threshold Hth1 and the upper limit threshold Hth2.

Assuming that two of the temperature sensor 23, the heat flux sensor 10, and the pressure sensor 24 are normal as described above, failure of the remaining one sensor can be determined.

In a case where a failed one of the temperature sensor 23, the heat flux sensor 10, and the pressure sensor 24 cannot be determined, abnormality of the sensor can be determined as follows.

For example, proper ranges of the heat flux sensor 10 and the pressure sensor 24 are determined from the detection result of the temperature sensor 23. As shown in Fig. 15, the lower limit threshold of the proper range of the heat flux sensor 10 is Hth1, and the upper limit threshold of the proper range of the heat flux sensor 10 is Hth2. Moreover, the lower limit threshold of the proper range of the pressure sensor 24 is Pthl, and the upper limit threshold of the proper range of the pressure sensor 24 is Pth2.

When the output value of the heat flux sensor 10 falls within the proper range, the heat flux sensor 10 is determined as normal. When the output value of the heat flux sensor 10 falls outside the proper range, the heat flux sensor 10 is determined as normal.

When the output value of the pressure sensor 24 falls within the proper range, the pressure sensor 24 is determined as normal. When the output value of the pressure sensor 24 falls outside the proper range, the pressure sensor 24 is determined as abnormal.

Assuming that one sensor is taken as normal, the proper ranges of the remaining two sensors are set as described above, and in this manner, failure of the remaining two sensors can be determined.

In a case where the heat flux sensor 10 is failed, the internal control unit 51 subsequently wirelessly transmits, at a step S208, not only the inner air temperature of the cylinder 90 detected by the temperature sensor 23, the value of the heat flux detected by the heat flux sensor 10, and the inner air pressure of the cylinder 90 detected by the pressure sensor 24 but also an indication of failure to an external control unit 52, and terminates the process.

In a case where the temperature sensor 23, the heat flux sensor 10, and the pressure sensor 24 are not failed, the internal control unit 51 subsequently determines, at a step S210, whether accuracy deviation is great. Specifically, the internal control unit 51 determines whether a difference between the heat flux detected by the heat flux sensor 10 and the lower limit threshold Hthlt is less than a reference value or a difference between the heat flux detected by the heat flux sensor 10 and the upper limit threshold Hth2 is less than a reference value.

In a case where the difference between the heat flux detected by the heat flux sensor 10 and the lower limit threshold Hthlt is less than the reference value or the difference between the heat flux detected by the heat flux sensor 10 and the upper limit threshold Hth2 is less than the reference value, the internal control unit 51 performs self-correction at a step S212.

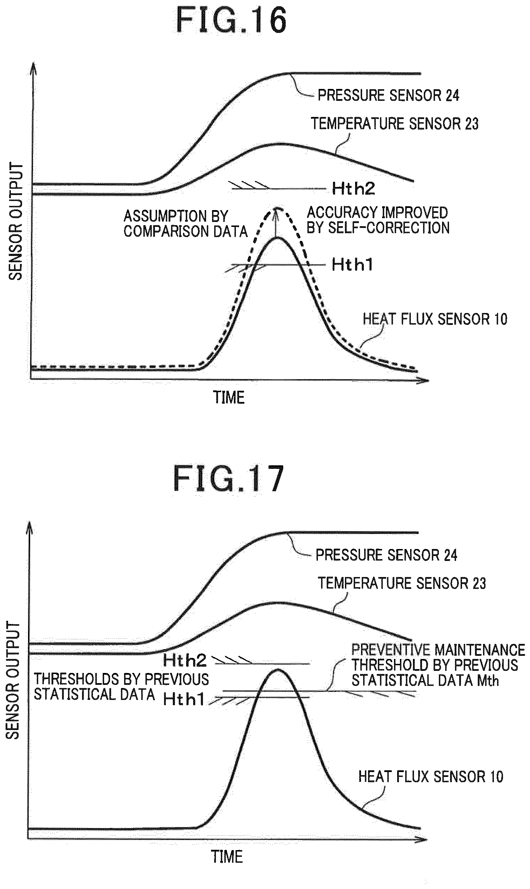

Fig. 16 shows a state when the difference between the heat flux detected by the heat flux sensor 10 and the lower limit threshold Hthlt is less than the reference value.

In such a state, the value of the heat flux detected by the heat flux sensor 10 is multiplied by a predetermined factor, and such a multiplied value is taken as the value of the heat flux detected by the heat flux sensor 10. Self-correction is performed as described above.

Next, at a step S214, the internal control unit 51 wirelessly transmits, together with the inner air temperature of the cylinder 90 detected by the temperature sensor 23 and the self-corrected value of the heat flux flowing from the inside of the cylinder 90 to the surface of the cylinder 90 and identified based on the signal output by the heat flux sensor 10, the inner air pressure of the cylinder 90 identified based on the signal output by the pressure sensor 24 and an indication of correction of the detection result of the heat flux sensor 10 to the external control unit 52, and the flow of the processing returns to the step S202.

In a case where the accuracy deviation is small and it is determined as NO at the step S210, the internal control unit 51 determines, at a step S116, whether the probability of failure of the heat flux sensor 10 is high. Specifically, as shown in Fig. 17, the internal control unit 51 sets the preventive maintenance threshold Mth based on the statistical heat flux data previously stored in the memory 51a at the step S204, and determines whether the value of the heat flux currently detected by the heat flux sensor 10 is equal to or greater than the preventive maintenance threshold Mth.

Note that the preventive maintenance threshold Mth can be, for example, set to a value obtained in such a manner that the average of previous heat fluxes stored in the memory 51a is multiplied by a certain constant (e.g., 10%).

In a case where it is, at the step S116, determined that the probability of failure of the heat flux sensor 10 is high, the internal control unit 51 subsequently wirelessly transmits, at a step S118, not only each value of the temperature detected by the temperature sensor 23, the pressure detected by the pressure sensor 24, and the heat flux detected by the heat flux sensor 10 but also an indication of a high probability of failure of the heat flux sensor 10 to the external control unit 52, and the processing returns to the step S202. In a case where it is determined that the probability of failure of the heat flux sensor 10 is not high, the flow of the processing returns to the step S202.

In the present embodiment, advantageous effects similar to those of the first embodiment can be obtained from a configuration in common with that of the first embodiment.

Moreover, a second sensor includes the temperature sensor 23 configured to detect the temperature as the physical quantity correlating with the first physical quantity, and the pressure sensor 24 configured to detect the pressure as the physical quantity correlating with the first physical quantity. Further, the internal control unit 51 can perform failure diagnosis for at least one of a first sensor or the second sensor by comparison of a change in the heat flux detected by the heat flux sensor with the detection result of the temperature sensor and the detection result of the pressure sensor.

### (Third Embodiment)

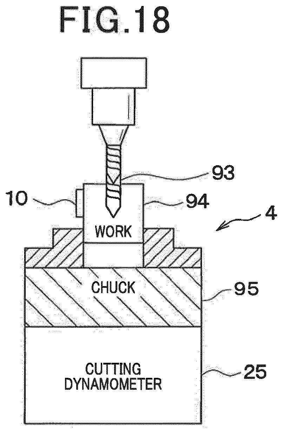

Fig. 18 illustrates a state where a composite sensor of a third embodiment of the present invention is provided at a cutting machine 4. The cutting machine 4 is a processing device configured to open a hole in a work 94 as a processing target object. The cutting machine 4 includes a chuck 95 configured to fix the work 94 as the processing target object, and a drill 93 rotatable by a not-shown motor. The drill 93 is a cutting tool used for cutting.

The work 94 is fixed onto the chuck 95. Moreover, the work 94 is placed below the drill 93. The work 94 includes a metal block, for example. While the drill 31 is rotating, a user operates a handle (not shown) in a downward direction. Thus, the rotating drill 93 processes the work 94 while moving in the downward direction. In this manner, hole opening processing is performed for the work 94.

Upon the hole opening processing, heat energy increases due to friction between the drill 93 and the work 94, and a heat flux flowing from a contact portion between the drill 93 and the work 94 to a surface of the work 94 is generated. Such a heat flux exhibits correlation with cutting resistance upon cutting.

The composite sensor of the present embodiment has a heat flux sensor 10 configured to detect the heat flux, and a cutting dynamometer 25 as a cutting resistance detection unit configured to detect the cutting resistance upon cutting.

The heat flux sensor 10 is fixed to the surface of the work 94. The heat flux sensor 10 detects, as a first physical quantity, the heat flux flowing from the contact portion between the drill 93 and the work 94 to the surface of the work 94, thereby outputting a signal for identifying the heat flux to an internal control unit 51.

The cutting dynamometer 25 is arranged below the chuck 95 fixing the work 94. The cutting dynamometer 25 detects the cutting resistance upon cutting as a second physical quantity correlating with the first physical quantity, thereby outputting a signal indicating the detected cutting resistance to the internal control unit 51.

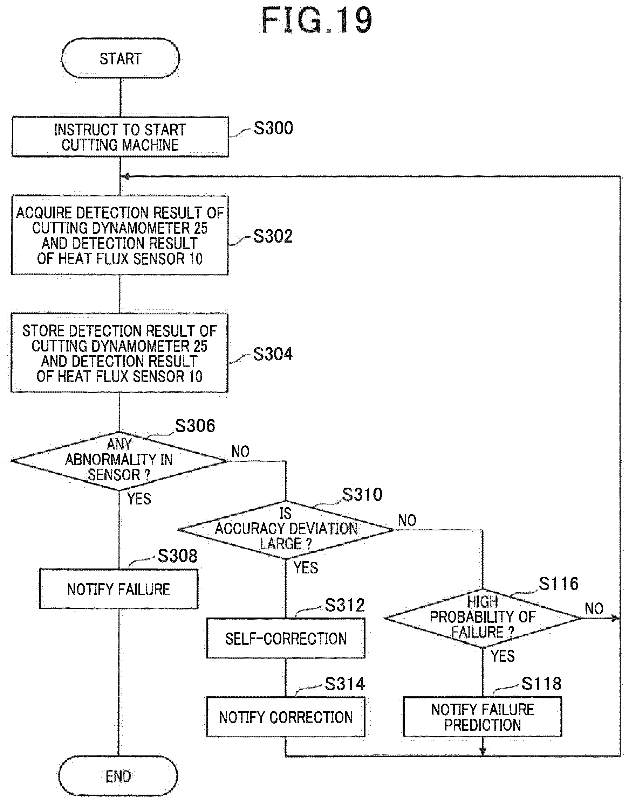

Fig. 19 shows a flowchart of processing to be executed by the internal control unit 51. The internal control unit 51 executes the processing shown in Fig. 19 at regular intervals. When an operator instructs, by operation of an operation unit (not shown), to start the processing, the internal control unit 51 executes the processing shown in Fig. 19. First, the internal control unit 51 instructs to start the cutting machine 4 at a step S300.

Specifically, power supply to a motor (not shown) configured to rotate the drill 93 is started such that the motor is actuated.

Next, at a step S302, the internal control unit 51 acquires the detection results of the cutting dynamometer 25 and the heat flux sensor 10. Specifically, the internal control unit 51 identifies a cutting resistance value based on the signal output by the cutting dynamometer 25, and identifies the heat flux based on the signal output by the heat flux sensor 10.

Next, at a step S304, the internal control unit 51 causes a memory 51a to store the detection result of the cutting dynamometer 25 and the detection result of the heat flux sensor 10 acquired at the step S302. Specifically, the temperature identified based on the signal output by the cutting dynamometer 25 and the heat flux output by the heat flux sensor 10 are stored in the memory 51a.

Note that not only the latest values but also statistical data for a certain data amount are stored in the memory 51a. The data stored in the memory 51a as described herein is used when a later-described preventive maintenance threshold Mth is set.

Next, at a step S306, the internal control unit 51 determines whether there is an abnormality in the sensor. Specifically, by comparison between the cutting resistance detected by the cutting dynamometer 25 and the output value of the heat flux sensor 10, it is determined whether there is an abnormality in the sensor.

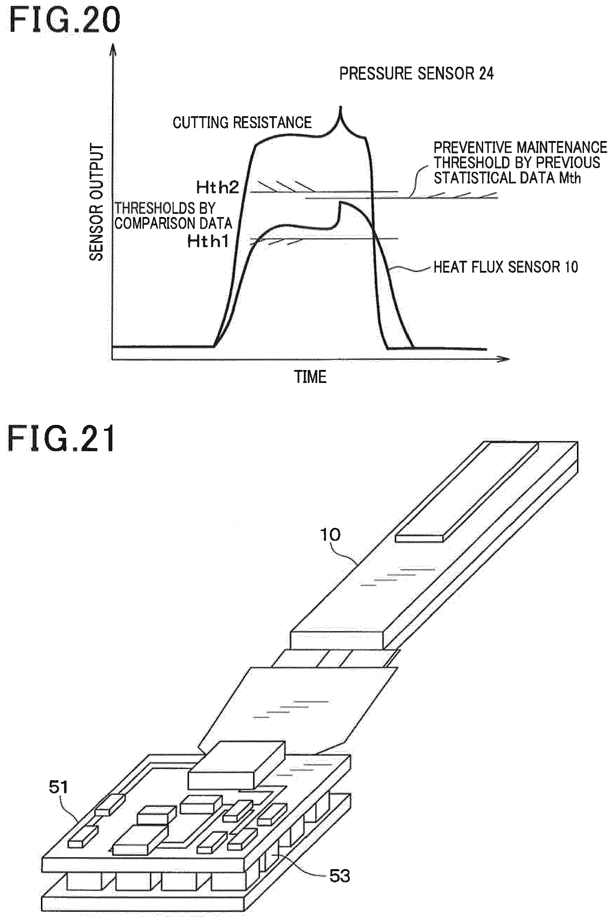

Specifically, as shown in Fig. 20, a standard range with a lower limit threshold Hth1 and an upper limit threshold Hth2 is set based on the cutting resistance detected by the cutting dynamometer 25. Then, it is determined whether the output value of the heat flux sensor 10 falls within the standard range with the lower limit threshold Hth1 and the upper limit threshold Hth2.

The output value of the normal heat flux sensor 10 falls within the standard range with the lower limit threshold Hth1 and the upper limit threshold Hth2. However, the output value of the abnormal heat flux sensor 10 falls outside the standard range with the lower limit threshold Hth1 and the upper limit threshold Hth2, and it is determined as failure.

In a case where the output value of the heat flux sensor 10 falls outside the standard range with the lower limit threshold Hth1 and the upper limit threshold Hth2, the internal control unit 51 wirelessly transmits, at a step S308, not only the values of the cutting resistance detected by the cutting dynamometer 25 and the heat flux detected by the heat flux sensor 10 but also an indication of failure to an external control unit 52. Then, the process is terminated.

In a case where the heat flux detected by the heat flux sensor 10 falls within the standard range with the lower limit threshold Hth1 and the upper limit threshold Hth2, determination at the step S306 is NO. Then, at a step S310, the internal control unit 51 determines whether accuracy deviation is great.

Specifically, the internal control unit 51 determines whether a difference between the heat flux detected by the heat flux sensor 10 and the lower limit threshold Hthlt is less than a reference value or a difference between the heat flux detected by the heat flux sensor 10 and the upper limit threshold Hth2 is less than a reference value.

In a case where the difference between the heat flux detected by the heat flux sensor 10 and the lower limit threshold Hthlt is less than the reference value or the difference between the heat flux detected by the heat flux sensor 10 and the upper limit threshold Hth2 is less than the reference value, the internal control unit 51 performs self-correction at a step S312.

Fig. 9 shows a state when the difference between the heat flux detected by the heat flux sensor 10 and the lower limit threshold Hthlt is less than the reference value. In such a state, the value of the heat flux detected by the heat flux sensor 10 is multiplied by a predetermined factor, and such a multiplied value is taken as the value of the heat flux detected by the heat flux sensor 10. Self-correction is performed as described above.

Next, at a step S314, the internal control unit 51 wirelessly transmits, together with the cutting resistance detected by the cutting dynamometer 25 and the self-corrected value of the heat flux detected by the heat flux sensor 10, an indication of correction of the detection result of the heat flux sensor 10 to the external control unit 52, and the flow of the processing returns to the step S302.

In a case where the accuracy deviation is small and it is determined as NO at the step S310, the internal control unit 51 determines, at a step S116, whether the probability of failure of the heat flux sensor 10 is high. In a case where the probability of failure of the heat flux sensor 10 is high, failure prediction is notified at a step S118. In a case where the probability of failure of the heat flux sensor 10 is not high, the flow of the processing returns to the step S302.

In the present embodiment, advantageous effects similar to those of the first embodiment can be obtained from a configuration in common with that of the first embodiment.

Moreover, a second sensor is the cutting dynamometer 25 as the cutting resistance detection unit configured to detect, as the second physical quantity, the cutting resistance at the cutting machine. Then, the internal control unit 51 can perform failure diagnosis for at least one of a first sensor or the second sensor by comparison between a change in the heat flux detected by the heat flux sensor 10 and a change in the cutting resistance detected by the cutting dynamometer 25.

### (Fourth Embodiment)

An entire configuration of a composite sensor of a fourth embodiment of the present invention is illustrated in Fig. 21. The composite sensor of the present embodiment includes a power generation unit 53 having a Peltier element.

The Peltier element has such a structure that two types of metal are joined together, and has such properties that when DC current is applied to between the two types of metal, heat moves from one type of metal to the other type of metal. Moreover, the Peltier element can generate thermoelectric power when a temperature difference between the two types of metal is provided. Such action is called the Seebeck effect. The power generation unit 53 is a thermoelectric conversion module configured to generate power by the Seebeck effect of the Peltier element.

The composite sensor of the present embodiment is different from that of the first embodiment in that the Peltier element is further incorporated as the thermoelectric conversion module.

It is configured such that the composite sensor of the present embodiment includes the power generation unit 53 configured to generate power by the Seebeck effect of the Peltier element and that a heat flux sensor 10, first and second temperature sensors 21, 22, and an internal control unit 51 are actuated by the power generated by the power generation unit 53.

In the present embodiment, similar advantageous effects are obtained from a configuration in common with that of the first embodiment. Further, a power source, a battery, etc. for supplying power for driving the composite sensor are not necessary, and therefore, there are no limitations on an installation location.

In the present embodiment, the advantageous effects similar to those of the first embodiment can be obtained from the configuration in common with that of the first embodiment.

### (Other Embodiments)

(1)Each of the above-described first to fourth embodiments describes such a configuration that the heat flux detected by the heat flux sensor 10 is detected as the first physical quantity.
   However, it may be configured such that other physical quantities than the heat flux may be detected as the first physical quantity.
(2)Each of the above-described first to fourth embodiments describes such a configuration that the internal control unit 51 transmits, to the external control unit 52, the heat flux identified based on the signal output by the heat flux sensor 10 and each temperature identified based on the signals output by the first and second temperature sensors 21, 22. However, it may be configured such that the external control unit 52 identifies the heat flux based on the signal output by the heat flux sensor 10, and further identifies the temperatures based on the signals output by the first and second temperature sensors 21, 22.
(3)In each of the above-described first to fourth embodiments, the communication unit 60 configured to perform wireless communication between the internal control unit 51 and the external control unit 52 is provided, and the data is wirelessly transmitted from the internal control unit 51 to the external control unit 52 via the communication unit 60. However, it may be configured such that the data is transmitted via a wire.
(4)The above-described fourth embodiment describes such a configuration that the power generation unit using the Peltier element is provided as the power generation unit and that the first and second sensors and the internal control unit 51 are actuated by the power generated by the power generation unit. However, it may be configured such that a power generation unit configured to perform piezoelectric power generation using a piezoelectric element, vibration power generation using a vibration power generation element, photovoltaic power generation using a photovoltaic power generation element, or wind power generation is provided and that the first and second sensors and the internal control unit 51 are actuated by power generated by such a power generation unit.

Note that the present invention is not limited to the above-described embodiments, and changes can be, as necessary, made within the scope of the claims. Moreover, the above-described embodiments are not unrelated to each other, and can be combined as necessary except for cases clearly unavailable for combination. Further, in each of the above-described embodiments, the elements forming the embodiments are not essential unless otherwise clearly specified as the essential elements and unless otherwise clearly taken as the essential elements in principle.

### (Conclusions)

(C1) According to a first aspect described in part or entirety of the above-described embodiments, the control unit performs the failure diagnosis for at least one of the first sensor or the second sensor by comparison between the detection result of the first sensor and the detection result of the second sensor. Thus, sensor failure can be detected when some of the sensors are failed.
(C2) According to a second aspect described in part or entirety of the above-described embodiments, the first sensor can be the heat flux sensor 10 configured to detect the heat flux as the first physical quantity.
(C3) According to a third aspect described in part or entirety of the above-described embodiments, the heat flux sensor 10 can be configured as follows: the multiple first and second via holes 101, 102 penetrating, in the thickness direction, the insulating substrate 100 made of the thermoplastic resin are formed; the first and second interlayer connection members 130, 140 made of different types of metal are each embedded in the first and second via holes; and the first and second interlayer connection members 130, 140 are alternately connected in series.
   It can be also configured as follows: after the heat flux has passed through the insulating substrate 100 in the thickness direction, the temperature difference between the one-side and other-side connection portions of the first and second interlayer connection members 130, 140 is generated; and the thermoelectric power is generated at the one-side and other-side connection portions of the first and second interlayer connection members 130, 140.
(C4) According to a fourth aspect described in part or entirety of the above-described embodiments, the second sensor is the temperature sensor configured to detect the temperature as the physical quantity correlating with the first physical quantity.
   Moreover, the control unit can perform the failure diagnosis for at least one of the first sensor or the second sensor by comparison between a change in the heat flux detected by the first sensor and a change in the temperature detected by the second sensor.
(C5) According to a fifth aspect described in part or entirety of the above-described embodiments, the second sensor has the first temperature sensor 21 arranged on the surface on the upstream side of the heat flux passing through the insulating substrate of the heat flux sensor, and the second temperature sensor 22 arranged on the surface on the downstream side of the heat flux passing through the insulating substrate of the heat flux sensor.
   Moreover, the control unit can perform the failure diagnosis for at least one of the heat flux sensor or the first and second temperature sensors by comparison between a change in the heat flux detected by the first sensor and the temperature difference between the temperature detected by the first temperature sensor and the temperature detected by the second temperature sensor.
(C6) According to a sixth aspect described in part or entirety of the above-described embodiments, the composite sensor further includes the correction unit (51b, the steps S112, S212, S312) configured to correct, in a case where it has been determined that the diagnosis result of the failure diagnosis for at least one of the first sensor or the second sensor does not show failure, at least one of the detection result of the first sensor or the detection result of the second sensor by comparison between the detection result of the first sensor and the detection result of the second sensor.
   With this configuration, at least one of the detection result of the first sensor or the detection result of the second sensor can be corrected in advance before at least one of the first sensor or the second sensor is determined as failed.
(C7) According to a seventh aspect described in part or entirety of the above-described embodiments, the second sensor includes the temperature sensor configured to detect the temperature as the physical quantity correlating with the first physical quantity, and the pressure sensor configured to detect the pressure as the physical quantity correlating with the first physical quantity. Moreover, the control unit can perform the failure diagnosis for at least one of the first sensor or the second sensor by comparison of a change in the heat flux detected by the heat flux sensor with the detection result of the temperature sensor and the detection result of the pressure sensor.
(C8) According to an eighth aspect described in part or entirety of the above-described embodiments, the second sensor can be the cutting resistance detection unit configured to detect, as the second physical quantity, the cutting resistance at the cutting machine. Moreover, the control unit can perform the failure diagnosis for at least one of the first sensor or the second sensor by comparison between a change in the heat flux detected by the heat flux sensor and a change in the cutting resistance detected by the cutting resistance detection unit.
(C9) According to a ninth aspect described in part or entirety of the above-described embodiments, the control unit includes the storage control unit (51c, S104, S204, S304) configured to cause the storage medium (51a) to store the detection result of the first sensor and the detection result of the second sensor. Further, the control unit includes the failure prediction unit (51d, the step S116) configured to predict failure of the first sensor and the second sensor by comparison of the detection result of the first sensor and the detection result of the second sensor with the detection results of the first sensor and the detection results of the second sensor previously stored in the storage medium.
   With this configuration, failure of the first sensor and the second sensor can be predicted.
(C10) According to a tenth aspect described in part or entirety of the above-described embodiments, the control unit includes the communication unit for communication. Further, the control unit includes the internal control unit configured to acquire the detection result of the first sensor and the detection result of the second sensor, thereby transmitting the detection result of the first sensor and the detection result of the second sensor via the communication unit. Further, the control unit includes the external control unit configured to perform the failure diagnosis for at least one of the first sensor or the second sensor by comparison between the detection result of the first sensor and the detection result of the second sensor transmitted from the internal control unit. With this configuration, failure of at least one of the first sensor or the second sensor can be diagnosed.
(C11) According to an eleventh aspect described in part or entirety of the above-described embodiments, the communication unit performs wireless communication, and the internal control unit transmits, by the wireless communication via the communication unit, the detection result of the first sensor and the detection result of the second sensor to the external control unit.
   With this configuration, there are no limitations on the installation location of the composite sensor.
(C12) According to a twelfth aspect described in part or entirety of the above-described embodiments, the composite sensor further includes the power generation unit configured to generate the power. The first sensor, the second sensor, and the control unit are actuated by the power generated by the power generation unit. With this configuration, there are no limitations on the installation location.

## Claims

1. A composite sensor (1) including a first sensor (10) configured to detect a first physical quantity, and a second sensor (21 to 25) as a sensor of a different type from the first sensor, the second sensor being configured to detect a second physical quantity identical to or correlating with the first physical quantity, comprising:
a control unit (51, 52) configured to perform failure diagnosis for at least one of the first sensor or the second sensor by comparison between a detection result of the first sensor and a detection result of the second sensor.

2. The composite sensor (1) according to claim 1, wherein
the first sensor is a heat flux sensor configured to detect a heat flux as the first physical quantity.

3. The composite sensor (1) according to claim 2, wherein
the heat flux sensor is configured such that multiple first and second via holes (101, 102) penetrating, in a thickness direction, an insulating substrate (100) made of thermoplastic resin are formed, and first and second interlayer connection members (130, 140) made of different types of metal are each embedded in the first and second via holes,
the first and second interlayer connection members are alternately connected in series, and after the heat flux has passed through the insulating substrate in the thickness direction, a temperature difference between one-side and other-side connection portions of the first and second interlayer connection members is generated, and thermoelectric power is generated at the one-side and other-side connection portions of the first and second interlayer connection members.

4. The composite sensor (1) according to claim 2 or 3, wherein
the second sensor is a temperature sensor configured to detect a temperature as a physical quantity correlating with the first physical quantity; and
the control unit performs the failure diagnosis for at least one of the first sensor or the second sensor by comparison between a change in the heat flux detected by the first sensor and a change in the temperature detected by the second sensor.

5. The composite sensor (1) according to claim 4, wherein
the second sensor includes a first temperature sensor (21) arranged on a surface on an upstream side of the heat flux passing through the insulating substrate of the heat flux sensor and a second temperature sensor (22) arranged on a surface on a downstream side of the heat flux passing through the insulating substrate of the heat flux sensor; and
the control unit performs the failure diagnosis for at least one of the heat flux sensor or the first and second temperature sensors by comparison between the change in the heat flux detected by the first sensor and a temperature difference between a temperature detected by the first temperature sensor and a temperature detected by the second temperature sensor.

6. The composite sensor (1) according to any one of claims 1 to 3, further comprising:
a correction unit (51b, S112, S212, S312) configured to correct, in a case where it has been determined that a diagnosis result of the failure diagnosis for at least one of the first sensor or the second sensor does not show failure, at least one of the detection result of the first sensor or the detection result of the second sensor by comparison between the detection result of the first sensor and the detection result of the second sensor.

7. The composite sensor (1) according to claim 2 or 3, wherein
the second sensor includes a temperature sensor (23) configured to detect a temperature as a physical quantity correlating with the first physical quantity, and a pressure sensor (24) configured to detect a pressure as the physical quantity correlating with the first physical quantity; and
the control unit performs the failure diagnosis for at least one of the first sensor or the second sensor by comparison of a change in the heat flux detected by the heat flux sensor with a detection result of the temperature sensor and a detection result of the pressure sensor.

8. The composite sensor (1) according to claim 2 or 3, wherein
the second sensor is a cutting resistance detection unit (25) configured to detect, as the second physical quantity, cutting resistance at a cutting machine, and
the control unit performs the failure diagnosis for at least one of the first sensor or the second sensor by comparison between a change in the heat flux detected by the heat flux sensor and a change in the cutting resistance detected by the cutting resistance detection unit.

9. The composite sensor (1) according to any one of claims 1 to 3, wherein
the control unit includes
a storage control unit (51c, S104, S204, S304) configured to cause a storage medium (51a) to store the detection result of the first sensor and the detection result of the second sensor; and
a failure prediction unit (51d, S116) configured to predict failure of the first sensor and the second sensor by comparison of the detection result of the first sensor and the detection result of the second sensor with a detection result of the first sensor and a detection result of the second sensor previously stored in the storage medium.

10. The composite sensor (1) according to any one of claims 1 to 3, wherein
the control unit includes a communication unit (60) for communication;
an internal control unit (51) configured to acquire the detection result of the first sensor and the detection result of the second sensor, thereby transmitting the detection result of the first sensor and the detection result of the second sensor via the communication unit; and
an external control unit (52) configured to perform the failure diagnosis for at least one of the first sensor or the second sensor by comparison between the detection result of the first sensor and the detection result of the second sensor transmitted from the internal control unit.

11. The composite sensor (1) according to claim 10, wherein
the communication unit performs wireless communication, and
the internal control unit (51) transmits, by the wireless communication via the communication unit, the detection result of the first sensor and the detection result of the second sensor to the external control unit (52).

12. The composite sensor (1) according to any one of claims 1 to 3, further comprising:
a power generation unit (53) configured to generate power, wherein
the first sensor, the second sensor, and the control unit are actuated by the power generated by the power generation unit.
